# EUROPÄISCHE PATENTSCHRIFT

(11) **EP 3 483 039 B1**
(45) Veröffentlichungstag und Bekanntmachung des Hinweises auf die Patenterteilung: **17.03.2021**
(21) Anmeldenummer: 18205475.9
(22) Anmeldetag: 09.11.2018
(51) Int. Cl.: B62D 13/04, B62D 7/14

(54) **SELBSTLENKENDE FAHRZEUGACHSE**
SELF-STEERING VEHICLE AXLE
ESSIEU DE VÉHICULE AUTOGUIDÉ

(30) Priorität: 10.11.2017 DE 102017126443
(43) Veröffentlichungstag der Anmeldung: 15.05.2019
(73) Patentinhaber: V.S.E. Vehicle Systems Engineering B.V., 3905 NV Veenendaal (NL)
(72) Erfinder: de Zaaijer, Richard Johannes Wilhelmus, 4041 AH Kesteren (NL)
(74) Vertreter: Lemcke, Brommer & Partner Patentanwälte Partnerschaft mbB

(56) Entgegenhaltungen:
- EP-A2- 0 577 571
- EP-A2- 2 716 523
- DE-A1-102006 006 141
- DE-A1-102014 113 880

## Beschreibung

Die vorliegende Erfindung betrifft eine selbstlenkende Hinterachse für ein Fahrzeug mit einem Achskörper und zwei beiderseits des Achskörpers schwenkbar um jeweils eine Schwenkachse angelenkte Achsschenkel, die je eine Radnabe zur Befestigung eines Hinterrades tragen und die über eine Spurstange miteinander in Verbindung stehen, wobei sich die Schwenkachse in Vorwärtsrichtung in einem Abstand vor der Mittelachse der zugehörigen Radnabe befindet. Hierdurch erfolgt bei einer Kurvenfahrt in Vorwärtsrichtung bedingt durch Reibungskräfte der Hinterräder auf der Straße ein selbsttätiger Lenkeinschlag der Achsschenkel.

Derartige selbstlenkende Hinterachsen werden bei schweren Fahrzeugen wie LKW, Omnibussen oder Aufliegern eingesetzt. Gegenüber einer starren Hinterachse wird der Kurvenradius eines solchen Fahrzeugs verringert. Außerdem reduzieren sich auf Grund der geringeren Reibung der Räder auf der Straße der Reifenabrieb und der Kraftstoffverbrauch erheblich. Gegenüber einer aktiv gelenkten Hinterachse mit hydraulischem Lenksystem ist eine selbstlenkende Hinterachse technisch wesentlich weniger komplex und daher erheblich günstiger in der Herstellung bzw. Anschaffung.

Eine aktiv gelenkte Hinterachse ist aus der DE 10 2014 113 880 A1 bekannt. Diese hat hydraulische Lenkzylinder, mit denen die lenkbaren Räder einer Nachlaufachse bei langsamer Kurvenfahrt aktiv in einen Lenkeinschlag gebracht werden können. Dadurch erhöht sich die Manövrierfähigkeit des Fahrzeugs.

Aus der DE 10 2006 006 141 A1 ist ein Fahrzeuganhänger mit hydraulisch gesteuerter Tandemachse bekannt. Bei einer Kurvenfahrt kann die Manövrierfähigkeit des Anhängers erhöht werden, indem die lenkbaren Räder der Tandemachse aktiv in einen einstellbaren Lenkausschlag gebracht werden können. Die Einstellung geschieht, indem eine Auswahleinrichtung manuell betätigt wird, welche Teil des Fahrzeuganhängers ist.

Aus EP 0 577 571 A2 ist eine Lenkgruppe eines Lastkraftwagens, Sattelschleppers oder Aufliegers für die Rückwärtsfahrt mit einer selbstlenkenden Hinterachse gemäß dem Oberbegriff des Anspruchs 1 bekannt. Die selbstlenkende Hinterachse umfasst nachlaufgelenkte Hinterräder, mit denen bei einer Kurvenfahrt in Vorwärtsrichtung ein selbsttätiger Lenkausschlag erfolgt. Ferner weist die Lenkgruppe einen hydraulischen Lenkzylinder auf, der mit den Hinterrädern verbunden ist. Bei Rückwärtsfahrt wird der Lenkzylinder betätigt, um einen Lenkausschlag an den Hinterrädern einzustellen.

Ein Nachteil selbstlenkender Hinterachsen besteht darin, dass bei Rückwärtsfahrt entgegengesetzte Kräfte auf die Räder wirken, sodass die Hinterräder der Lenkachse in die entgegengesetzte Richtung, in die rangiert werden soll, einschlagen. Aus diesem Grund werden selbstlenkende Hinterachsen bei Rückwärtsfahrt in ihrer neutralen Mittelstellung, also in Geradeausrichtung der Hinterräder, arretiert. Eine selbstlenkende Hinterachse mit entsprechender Sperrvorrichtung ist beispielsweise in der EP 0 481 199 A2 beschrieben.

Das Arretieren der Hinterachse beim Rückwärtsfahren hat jedoch den Nachteil, dass sich der Lenkradius des Fahrzeugs in Rückwärtsrichtung gegenüber der Vorwärtsfahrt vergrößert und somit beim Rückwärtsrangieren mehr Platz benötigt wird, als bei Vorwärtsfahrt. Dies kann im schlimmsten Fall dazu führen, dass sich ein Fahrzeug in einer engen Sackgasse festfährt und nicht mehr herausrangiert werden kann.

Eine Aufgabe der Erfindung besteht daher darin, die Rangierfähigkeit eines Fahrzeugs bei Rückwärtsfahrt zu verbessern, ohne jedoch auf die erheblichen Vorteile einer selbstlenkenden Hinterachse verzichten zu müssen.

Die Aufgabe wird gelöst durch die Merkmale des Anspruchs 1. Vorteilhafte Ausgestaltungen sind den abhängigen Ansprüchen zu entnehmen.

Eine selbstlenkende Fahrzeugachse der eingangs genannten Art wird erfindungsgemäß mit einer Hilfslenkung versehen, welche mindestens mit einem auf die Achsschenkel wirkenden hydraulischen Lenkzylinder, einer mit dem Lenkzylinder hydraulisch verbundenen elektrischen Hydraulikpumpe sowie einem Steuergerät ausgestattet ist, welches ausgebildet ist, die Hydraulikpumpe bei einer Rückwärtsfahrt anzusteuern und in Abhängigkeit eines Lenksignals über den Lenkzylinder einen Lenkeinschlag der Achsschenkel einzustellen. Statt also die Hinterachse bei Rückwärtsfahrt in ihrer Mittelstellung zu arretieren, werden die Hinterräder bei Rückwärtsfahrt aktiv in die richtige Richtung gelenkt, in die gefahren werden soll. An sich würde man erwarten, dass auf Grund der Achsgeometrie einer selbstlenkenden Hinterachse bei Rückwärtsfahrt verhältnismäßig hohe Kräfte von der Straße auf die Hinterräder wirken, die überwunden werden müssen, um die Räder entgegen ihrem von der Achsgeometrie vorgegebenen Lenkverhalten einzuschlagen. Es hat sich jedoch gezeigt, dass in der Praxis bei Beginn einer Rückwärtsfahrt die Hinterräder bereits in der richtigen Richtung stehen, sodass die erforderlichen Lenkkräfte beherrschbar bleiben und von einer verhältnismäßig einfach aufgebauten Hilfslenkung leicht aufgebracht werden können. Somit bleiben auch bei Rückwärtsfahrt dieselben Lenkeigenschaften erhalten, wie bei Vorwärtsfahrt, und das Fahrzeug ist in Rückwärtsrichtung in gleicher Weise voll rangierfähig.

Gegenüber einer vollständig aktiven gelenkten Hinterachse bleiben auch bei der mit Hilfslenkung versehenen selbstlenkenden Hinterachse die Vorteile einer wesentlich einfacheren und kostengünstigeren Konstruktion weitestgehend erhalten, da die Hilfslenkung lediglich zum Rangieren bzw. bei niedrigen Geschwindigkeiten benötigt wird und aktiviert sein muss, darüber hinaus jedoch sowie im Fehlerfalle einfach deaktiviert werden kann, indem der Lenkzylinder beiderseits drucklos geschaltet wird. In diesem Falle verhält sich die Hinterachse wie eine herkömmliche selbstlenkende Hinterachse. Insbesondere kann gegenüber einer aktiven Hinterachslenkung auf einen zweiten Hydraulikkreislauf zur zwangsweisen Zentrierung der Hinterachse im Fehlerfalle bzw. bei höheren Geschwindigkeiten verzichtet werden. Die Hilfslenkung kommt daher mit verhältnismäßig wenigen, einfachen Bauteilen aus und kann wesentlich kompakter aufgebaut und für geringere Lenkkräfte ausgelegt werden, als eine herkömmliche aktive Hinterachslenkung.

Die Verwendung eines hydraulischen Lenkzylinders in Kombination mit einem elektronischen Steuergerät ermöglicht zudem einen sehr einfachen Aufbau der Hilfslenkung, da diese insbesondere ohne eine mechanische Schnittstelle auskommt. Die Hilfslenkung kann somit auf einfache Weise an unterschiedliche Fahrzeug- und Achstypen bzw. Einbausituationen angepasst werden, indem lediglich Systemparameter wie Durchmesser von Kolben und Kolbenstange, Kolbenstangenlänge und Hub angepasst werden.

Als Nachlauf wird bei Lenkachsen der Abstand in Längsrichtung zwischen Spurpunkt, d.i. der Durchstoßpunkt der Lenkungsdrehachse durch die Fahrbahnfläche, und Radaufstandspunkt, d.i. der Mittelpunkt der Reifenaufstandsfläche, bezeichnet. Der Radaufstandspunkt liegt üblicherweise in Fahrtrichtung hinter dem Spurpunkt (positiver Nachlauf), sodass das Rad der Lenkungsdrehachse nachläuft.

Wie eingangs erläutert ist bei einer selbstlenkenden Fahrzeugachse die Schwenkachse der Achsschenkel in Vorwärtsrichtung gesehen in einem Abstand vor der Mittelachse der zugehörigen Radnabe bzw. vor der gedachten Verbindungslinie zwischen den Radmittelpunkten in Geradeausstellung angeordnet, sodass bei einer Kurvenfahrt in Vorwärtsrichtung ein selbsttätiger Lenkeinschlag der Achsschenkel erfolgt. Das Abstandsmaß zwischen Radachse und Schwenkachse beträgt bei derartigen selbstlenkenden Fahrzeugachsen, wie sie ihm Rahmen der Erfindung zum Einsatz kommen, mindestens 100 mm, typischerweise zwischen 100 mm und 200 mm, weiter bevorzugt zwischen 140 mm und 165 mm. Die Schwenkachse selbst ist hierbei typischerweise gegenüber der Vertikalen nicht oder allenfalls minimal <2° geneigt, so dass sich aufgrund des Abstandmaßes ein großer Nachlauf der Räder (> 100 mm) ergibt, der zu den genannten Selbstlenkeigenschaften der Fahrzeugachse führt.

Demgegenüber ist bei herkömmlichen aktiv gelenkten (zwangslenkten) Fahrzeugachsen, insbesondere zwangsgelenkten Nachlaufachsen, die Schwenkachse der Achsschenkel auf Höhe der Mittelachse des Achskörpers bzw. auf Höhe der gedachten Verbindungslinie zwischen den Radmittelpunkten in Geradeausstellung angeordnet. Um bei einem Lenkeinschlag ein gewisses Rückstellmoment der Räder in Richtung ihrer Geradeausstellung zu erhalten, ist auch in diesem Falle ein geringer Nachlauf erwünscht. Dieser wird erzielt, indem die Schwenkachse der Achsschenkel (Lenkungsdrehachse) um einen Winkel von typischerweise 4° (zwischen 2° und 6°) gegenüber der Vertikalen geneigt wird. Der hierdurch erreichte Nachlauf liegt üblicherweise im Bereich von 20 mm bis 30 mm, jedenfalls erheblich unterhalb von 100 mm. Bei zwangsgelenkten Hinterachsen wird die hierdurch erzielte Rückstelleigenschaft der Hinterräder genutzt, um die Hinterachse bei einem Ausfall der Lenkung zurück in die Mittelstellung zu bringen, in der die Lenkung dann blockiert wird. Für eine selbstlenkende Hinterachse ist eine derartige Achsgeometrie jedoch nicht einsetzbar.

Die Bezeichnung einer Hinterachse als Nachlaufachse rührt im Übrigen nicht von einem vorstehend erwähnten Nachlauf, sondern davon, dass die Nachlaufachse hinter einer weiteren Hinterachse, der Antriebsachse, angeordnet ist, dieser also nachläuft. Nachlaufachsen können starr, liftbar, zwangsgelenkt oder nachlaufgelenkt (also selbstlenkend) sein. Befindet sich eine Hinterachse vor der Antriebsachse, so spricht man von einer Vorlaufachse.

Wie eingangs erwähnt, sind die heute erhältlichen selbstlenkenden Hinterachsen mit einer Sperrvorrichtung ausgestattet, die zur Verriegelung einer Lenkbewegung der Hinterräder in einer Geradeausstellung im Falle einer Rückwärtsfahrt oder im Falle einer Vorwärtsfahrt bei hoher Geschwindigkeit (z.B. über 50 km/h) dient. Auch die vorliegende Erfindung macht sich diese an sich bekannte Sperrvorrichtung zu Nutze, für den Fall, dass die Hilfslenkung deaktiviert wird. Im Rahmen der vorliegenden Erfindung ist daher vorzugsweise das Steuergerät derart ausgebildet, dass es die Sperrvorrichtung bei aktivierter Hilfslenkung inaktiv schaltet, also ein Arretieren der Hinterachse in Mittelstellung verhindert, während das Steuergerät bei deaktivierter Hilfslenkung, also im Fehlerfalle oder bei Geschwindigkeiten außerhalb des Betriebsbereichs der Hilfslenkung, die Sperrvorrichtung aktiv ist, sodass sich die Hinterachse in diesem Zustand wie eine herkömmliche Selbstlenker-Hinterachse verhält. Eine entsprechende Sperrvorrichtung kann auch in den Lenkzylinder integriert werden, was insbesondere bei beengten Platzverhältnissen an der Hinterachse vorteilhaft sein kann.

Versuche und Untersuchungen der Anmelderin haben ergeben, dass bei Vorwärtsfahrt die Lenkreaktion einer selbstlenkenden Hinterachse stets etwas zu spät erfolgt und sich das Lenkverhalten eines mit einer solchen Hinterachse ausgestatteten Fahrzeugs vor allem bei langsamer Fahrt von nicht mehr als 25 km/h erheblich verbessern lässt, wenn die Lenkbewegung der Hinterräder in Abhängigkeit eines Lenksignals mittels der Hilfslenkung unterstützt wird. Die Hilfslenkung und deren Steuergerät sind daher dazu ausgebildet, auch bei Vorwärtsfahrt im langsamen Geschwindigkeitsbereich bis etwa 25 km/h die Lenkbewegung der Hinterräder zu unterstützen und die Hilfslenkung erst bei Geschwindigkeiten oberhalb der für Vorwärtsfahrt vorgesehenen Höchstgeschwindigkeit zu deaktivieren.

Bei einer bevorzugten Ausgestaltung wird die Hilfslenkung bei Rückwärtsfahrt des Fahrzeugs mit einer Geschwindigkeit über einer für Rückwärtsfahrten vorgesehenen Höchstgeschwindigkeit, insbesondere von nicht mehr als 20 km/h, weiter bevorzugt von nicht mehr als 15 km/h, über das Steuergerät deaktiviert. Hierzu bringt das Steuergerät die Hinterräder mittels der Hilfslenkung in Geradeausstellung und entsperrt die Verriegelungsvorrichtung, so dass die Hinterachse nun in Mittelstellung arretiert. Anschließend deaktiviert die Steuerung die Hilfslenkung. Die Hinterachse verhält sich dann wie eine herkömmliche selbstlenkende Achse. Da höhere Geschwindigkeiten bei Rückwärtsfahrt vorrangig in Geradeausrichtung zu erwarten sind, die Hilfslenkung aber lediglich zum Rangieren benötigt wird, kann diese bei schnellerer Rückwärtsfahrt deaktiviert werden.

Ebenso ist es möglich und vorteilhaft, das Steuergerät so auszubilden, dass es die Hilfslenkung bei Stillstand des Fahrzeugs deaktiviert. Dies trägt dem erwähnten Umstand Rechnung, dass bei Einleiten einer Rückwärtsfahrt die Hinterräder von der vorausgegangenen Vorwärtsfahrt noch im richtigen Lenkeinschlag stehen. Da im Stand sehr hohe Kräfte aufgebracht werden müssen, um die stehenden Räder an den gelenkten Achsen eines schweren Fahrzeugs zu verdrehen, bietet der Verzicht auf eine Lenkfunktion an der Hinterachse im Stand erhebliche Vorteile in Bezug auf die aufzubringenden Kräfte und damit auf die Dimensionierung der hydraulischen Komponenten und mechanischen Teile des Hilfslenksystems.

Bei einer vorteilhaften Ausgestaltung der Erfindung ist die Hydraulikpumpe als reversierende Pumpe ausgebildet, deren Pumprichtung durch Wechsel der Drehrichtung umkehrbar ist, um so wahlweise Hydraulikflüssigkeit zu einem von zwei Druckanschlüssen zu fördern, die je mit einem der zwei Zylinderräume des Lenkzylinders verbunden sind. Durch Wechsel der Drehrichtung der Hydraulikpumpe wird der Hydraulikfluss und somit die Bewegungsrichtung des Lenkzylinders umgekehrt. Eine solche reversierende Pumpe ermöglicht einen besonders einfachen Aufbau der Hilfslenkung. Bei Verwendung eines Gleichlaufzylinders als Lenkzylinder können dessen Zylinderräume direkt mit den beiden Anschlüssen der Hydraulikpumpe verbunden werden, da die Flüssigkeitsvolumina auf beiden Seiten des Kolbens des Lenkzylinders gleich sind.

Daneben ist jedoch auch die Verwendung eines herkömmlichen Differentialzylinders als Lenkzylinder denkbar und vorteilhaft. Die beiden Zylinderräume des Lenkzylinders, also der kolbenseitige und der kolbenstangenseitige Druckraum des Zylinders, deren hydraulisch wirksame Flächen sich unterscheiden, werden hierbei wechselseitig von der Hydraulikpumpe druckbeaufschlagt, während der jeweils andere Zylinderraum über eine von der Zuleitung abzweigende und mit einem elektrisch oder hydraulisch steuerbaren Ventil versehene Rückflussleitung zu einem Tank hin druckentlastet wird. Die Hydraulikpumpe saugt in diesem Falle Hydraulikflüssigkeit aus einem Tank und fördert sie in Richtung des jeweils druckbeaufschlagten Zylinderraums, während Hydraulikflüssigkeit aus dem gegenüberliegenden Zylinderraum über die Rückflussleitung und das geöffnete Ventil in den Tank zurückfließen kann.

Hierbei ist insbesondere vorgesehen, dass die elektrisch steuerbaren Ventile als stromlos geöffnete Ventile ausgebildet sind, sodass diese zur Deaktivierung der Hilfslenkung stromlos geschaltet und somit in Offenstellung gebracht werden können. Somit ist sichergestellt, dass bei Ausfall der Hilfslenkung die Hinterachse in einem sicheren Betriebszustand ist, indem sie als freilaufende Selbstlenker-Hinterachse fungiert.

Die Ventile in den Rücklaufleitungen sind vorzugsweise als druckbegrenzte Ventile ausgeführt, die bei Überschreiten einer einstellbaren Druckschwelle im angeschlossenen Druckraum des Lenkzylinders öffnen und somit Hydraulikflüssigkeit in den Tank ableiten. Die Druckschwelle ist hierbei durch Bestromung des Ventils einstellbar und wird von dem Steuergerät zur Regelung der Lenkkräfte angepasst. Gleichzeitig schützen die Ventile den Lenkzylinder vor Überlastung durch Überschreiten maximal zulässiger Druckwerte. Die elektrisch steuerbaren Ventile sind vorzugsweise in einem hydraulischen Steuerblock integriert. Dieser kann darüber hinaus auch Rückschlagventile in den von der Hydraulikpumpe zu den beiden Druckräumen führenden Zuleitungen enthalten.

Bei einer weiteren bevorzugten Ausgestaltung ist mindestens ein mit dem Steuergerät verbundener Sensor zur Bestimmung eines Einschlagwinkels der Achsschenkel vorgesehen. Ein solcher Sensor ermöglicht eine aktive Regelung des Lenkwinkels durch das Steuergerät. Alternativ oder kumulativ kann auch vorgesehen sein, dass das Steuergerät den Lenkwinkel anhand des von der Hydraulikpumpe geförderten Ölvolumens ermittelt. Bei jeder Umdrehung der Hydraulikpumpe wird eine vorgegebene Menge Hydraulikflüssigkeit gefördert. Somit kann bei einer bevorzugten Ausführungsform vorgesehen sein, dass das Steuergerät, gegebenenfalls über ein zusätzliches, zwischengeschaltetes Motorsteuergerät für einen vorgegebenen Lenkeinschlag die Hydraulikpumpe so ansteuert, dass diese eine entsprechende Anzahl an Pumpenumdrehungen ausführt.

Ist die Hinterachse für einen Auflieger vorgesehen, so kann das Lenksignal vorzugsweise durch einen am Königszapfen des Aufliegers angeordneten Sensor zur Bestimmung eines Relativwinkels zwischen Zugfahrzeug und Auflieger erzeugt werden. Da der Auflieger das Lenksignal selbst ermitteln kann, ist er autark vom Lenksystem der Zugmaschine, sodass keine spezielle Anpassung und Abstimmung des Lenksystems der Zugmaschine und der Hilfslenkung am Auflieger erforderlich ist.

Ebenso ist es möglich und vorteilhaft, am Steuergerät der Hilfslenkung eine Schnittstelle für einen fahrzeuginternen Kommunikationsbus, beispielsweise einen CAN-Bus, vorzusehen, über den das Lenksignal, ein fahrgeschwindigkeitsabhängiges Signal und/oder ein Signal übertragen wird, welches eine Rückwärtsfahrt anzeigt. Ein fahrgeschwindigkeitsabhängiges Signal ist üblicherweise bei einem Fahrzeug ohnehin vom Fahrzeugstrang oder dem Bremssystem verfügbar. Das Signal zur Anzeige einer Rückwärtsfahrt kann auf einfache Weise vom Rückfahrscheinwerfer abgegriffen werden.

Um ein nervöses Lenkverhalten um die Mittellage der Lenkung herum zu vermeiden, kann das Steuergerät darüber hinaus ausgebildet sein, Lenkbewegungen der Achsschenkel innerhalb eines Kleinwinkelbereichs um die Mittellage zu unterbinden. Im Falle eines Aufliegers kann dieser Winkelbereich beispielsweise ± 2° Winkelversatz zwischen Zugfahrzeug und Auflieger betragen. Hierbei wird ausgenutzt, dass das Lenkverhalten an der selbstlenkenden Hinterachse nicht sonderlich präzise sein muss. Es kommt mehr auf die Richtung des Lenkeinschlags als dessen exakte Winkelposition an, da letztlich jeder ungefähr passende Lenkeinschlag in die richtige Lenkrichtung besser als eine Arretierung der Hinterachse in Mittelstellung ist.

Weitere Vorteile und Ausgestaltungen der vorliegenden Erfindung ergeben sich aus der nachfolgenden Beschreibung von Ausführungsbeispielen anhand der Figuren. Dabei zeigt:
- Figur 1: eine schematische Darstellung der Achsen eines Fahrzeugs mit selbstlenkender Nachlaufachse und die in Vorwärtsfahrtrichtung auf die Räder wirkenden Kräfte,
- Figur 2: die Krafteinwirkung auf die Räder des Fahrzeugs aus Figur 1 bei Rückwärtsfahrt,
- Figur 3: den schematischen Aufbau einer selbstlenkenden Nachlaufachse in einer Seitenansicht,
- Figur 4: einen Schaltplan einer erfindungsgemäßen Hilfslenkung für die Nachlaufachse aus Figur 1 in einem ersten Ausführungsbeispiel und
- Figur 5: ein zweites Ausführungsbeispiel für eine erfindungsgemäße Hilfslenkung.

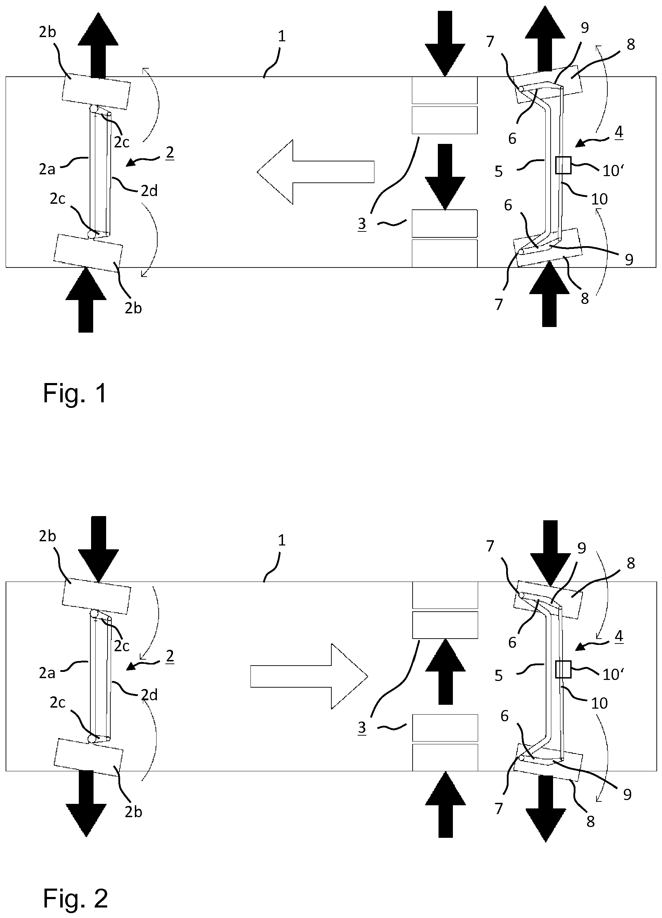

In Figur 1 sind schematisch die Achsen eines dreiachsigen Fahrzeugs, wie etwa eines LKWs, gezeigt. Das Fahrzeug 1 hat eine gelenkte Vorderachse 2, eine starre, mit dem Antrieb verbundene Hinterachse 3 sowie eine selbstlenkende Nachlaufachse 4. Die Vorderachse 2 ist mit einer Achsschenkellenkung herkömmlicher Bauart versehen. An einem Achskörper 2a sind links und rechts schwenkbare Achsschenkel angelenkt, die jeweils eine Radnabe mit dem daran befestigten Vorderrad 2b tragen. Über Lenkhebel bzw. Spurhebel 2c und eine Spurstange 2d sind die Achsschenkel gelenkig miteinander verbunden. Über entsprechende Lenkzylinder (nicht gezeigt) kann auf die Spurhebel 2c die Lenckraft übertragen werden, um den Lenkeinschlag der Vorderräder 2b einzustellen. In der vertikalen Projektion befindet sich die Schwenkachse der Vorderräder 2b in Fahrtrichtung gesehen in etwa auf Höhe ihrer jeweiligen Mittelachse. Die von der Straße auf die Vorderräder 2b wirkenden Kräfte, in Figur 1 durch schwarze Pfeile angedeutet, bewirken keine Auslenkbewegung der Vorderräder 2b. Ein geringer positiver Nachlauf, d.h. eine leichte Neigung der Schwenkachsen der Räder nach hinten, sorgt zusammen mit einer Spreizung der Vorderräder, also in Querrichtung leicht nach innen geneigten Schwenkachsen der Räder, für ein Rückstellmoment der Räder in Geradeausrichtung.

Die Nachlaufachse 4 ist hingegen als selbstlenkende Achse konstruiert. Hierzu ist der Achskörper 5 an seinen beiden seitlichen Enden in Fahrtrichtung gesehen nach vorne hin verlängert. An beiden Seiten des Achskörpers 5 ist jeweils ein Achsschenkel 6 angelenkt, dessen Schwenkachse von einem Achsschenkelbolzen 7 gebildet wird. An den Achsschenkeln 6 sind über zugehörige Radnaben die Hinterräder 8 befestigt. Über Spurhebel 9 und eine Spurstange 10 sind die beiderseitigen Achsschenkel 6 gelenkig verbunden. Wesentlich hierbei ist, dass in der vertikalen Projektion die von den Achsschenkelbolzen 7 gebildeten Schwenkachsen der Achsschenkel 6 sich in Fahrtrichtung gesehen vor den Mittelachsen der zugehörigen Hinterräder 8 befinden. Durch Reibungskräfte der Räder auf der Straße wird hierdurch bei einer Kurvenfahrt in Vorwärtsrichtung ein selbsttätiger Lenkeinschlag der Hinterräder 8 bewirkt, ähnlich wie dies bei den Lenkrollen eines Schreibtischstuhls oder eines Einkaufswagens der Fall ist.

In Figur 1 befindet sich das Fahrzeug 1 in Vorwärtsfahrt und führt hier beispielhaft eine Rechtskurve aus, d.h. die Vorderräder 2b sind nach rechts eingeschlagen. Die resultierenden Reibungskräfte von der Straße auf die Vorderräder wirken von der linken Seite, um das Fahrzeug 1 in eine Rechtskurve zu bringen (Zentripetalkraft). Auf die Hinterräder der ungelenkten Antriebsachse 3 wirken in einer Rechtskurve Kräfte von rechts, während auf die selbstlenkende Nachlaufachse 4 wiederum eine Kraftresultierende von der linken Seite wirkt. Diese führt auf Grund der erläuterten Achsgeometrie zu dem gewünschten Lenkeinschlag der Hinterräder 8 an der Nachlaufachse 4.

In Figur 2 ist dasselbe Fahrzeug 1 bei einer Rückwärtsfahrt gezeigt. Die Vorderräder der nun in Fahrtrichtung hinten befindliche Vorderachse 2 sind für eine Rückwärts-Linkskurve nach rechts eingeschlagen. Die von der Straße auf die Hinterräder 8 der Nachlaufachse 4 wirkenden Kräfte sind bei einer Rückwärtsfahrt jedoch entgegengesetzt gerichtet und bewirken ohne entsprechende Gegenmaßnahmen einen Lenkeinschlag in die verkehrte Richtung, also hier in Rückwärtsrichtung nach rechts. In Figur 2 ist dies entsprechend dargestellt. Das Fahrzeug 1 würde sich nun statt in eine Linkskurve in schräger Richtung geradeaus bewegen. Um dies zu verhindern, wird bei selbstlenkenden Nachlaufachsen herkömmlicher Bauart die Lenkung in neutraler Mittelstellung, also in Geradeausstellung der Räder, verriegelt, wodurch sich jedoch der Kurvenradius bei Rückwärtsfahrt vergrößert. Die Verriegelung der Hinterachslenkung erfolgt durch eine Sperrvorrichtung, wie zum Beispiel eine Klinkensperre, an der Spurstange.

Für ein Verriegeln ist es notwendig das die Achse sich in Mittestellung befindet. Für den Fahrer bedeutet dies, er muss, bevor er eine Rückwärtsfahrt einleitet, zunächst ein Stück geradeaus in Vorwärtsrichtung gefahren sein, um die Nachlaufachse in Mittelstellung zu bringen. Anderenfalls würde die Achse beim Rückfahren meist so schnell lenken, dass eine Verriegelung nicht stattfinden kann, sondern die Lenkung über die Mittelstellung hinaus bis zum Achsanschlag einschlägt. Dann muss der Fahrer erst wieder vorwärtsfahren, bis die Verriegelung in Mittelstellung arretiert, bevor er wieder rückwärtsfahren kann.

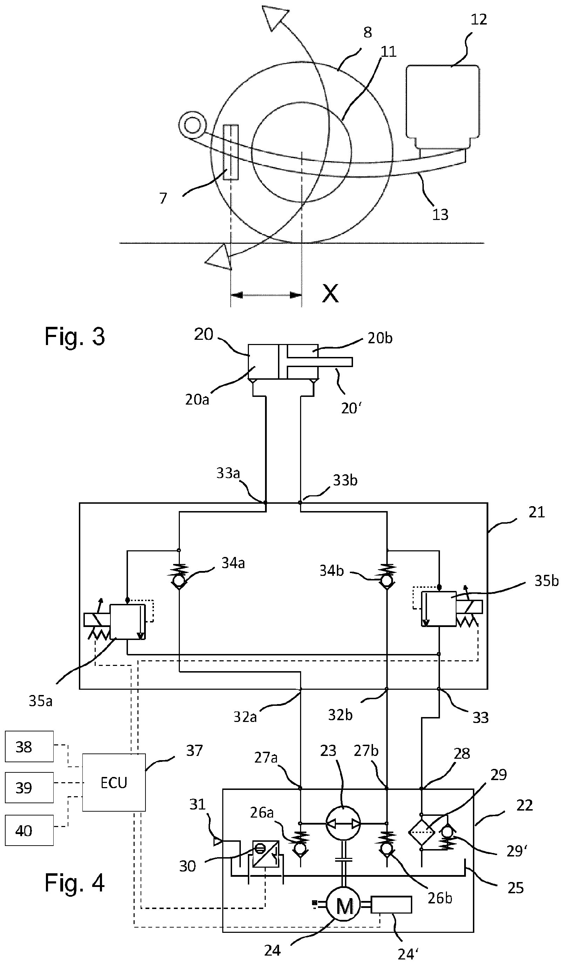

In Figur 3 ist nochmals schematisch die Achsgeometrie einer selbstlenkenden Hinterachse gezeigt. Der Achsschenkel, an dem Radnabe 11 und Hinterrad 8 angebracht sind, ist um die von dem Achsschenkelbolzen 7 definierte Schwenkachse schwenkbar am Achskörper der Hinterachse angelenkt. Der Achskörper selbst ist wiederum über eine Federung, von der hier beispielhaft ein Federungsbalg 12 und eine Fahrwerksfeder 13 gezeigt sind, am Chassis des Fahrzeugs angebracht. Wesentlich für die selbstlenkende Achsgeometrie ist der Abstand X, um den die Schwenkachse 7 gegenüber der Mittelachse von Hinterrad 8 bzw. Nabe 11 in Richtung Fahrzeugvorderachse nach vorne versetzt ist. Dieser muss groß genug bemessen sein, dass die bei einer Vorwärtsfahrt von der Straße auf das Hinterrad 8 wirkenden Kräfte einen selbsttätigen Lenkausschlag bewirken.

Figur 4 zeigt in einem ersten Ausführungsbeispiel eine Hilfslenkung für die selbstlenkende Nachlaufachse 4. Die Hilfslenkung umfasst einen Lenkzylinder 20, einen Hydraulikblock 21 und einen sogenannten Powerpack 22, von dem der Lenkzylinder 20 im Falle einer Lenkbewegung steuerbar mit Druck beaufschlagt werden kann. Der Lenkzylinder 20 wird am Achskörper 5 der Nachlaufachse 4 befestigt, und seine Kolbenstange 20' wirkt auf die Spurhebel 9 oder auf einen separaten Lenkhebel an den Achsschenkeln 6. Der Lenkzylinder 20 ist im Ausführungsbeispiel als Differentialzylinder ausgeführt, d.h. die hydraulisch wirksame Fläche auf der Kolbenseite und der Kolbenstangenseite unterscheiden sich um die Fläche der Kolbenstange 20'.

Der Powerpack 22 umfasst eine reversierende Hydraulikpumpe 23, die von einem Elektromotor 24 angetrieben wird. Der Motor 24 besitzt ein Motorsteuergerät 24', über das der Motor 24 angesteuert werden kann, um die Pumpe 23 anzutreiben. Der Powerpack 22 umfasst des Weiteren einen Hydraulikmitteltank 25, aus dem die Pumpe 23 je nach Förderrichtung über eines der zwei Rückschlagventile 26a, 26b Hydraulikflüssigkeit ansaugt. Der Powerpack 22 hat zwei von der Pumpe 23 kommende Druckanschlüsse 27a, 27b, die über den Hydraulikblock 21 mit den beiden Druckräumen 20a, 20b des Lenkzylinders 20 verbunden sind. Außerdem hat der Powerpack 22 einen Anschluss 28 für eine Rücklaufleitung, die über einen Filter 29 zurück in den Hydraulikmitteltank 25 führt. Sollte der Filter 29 verstopft sein, so sorgt ein parallel geschaltetes Rückschlagventil 29' dafür, dass die Hydraulikflüssigkeit dennoch mit leichtem Überdruck zurück in den Tank 25 fließen kann. Des Weiteren sind ein Einfüll- bzw. Ablassanschluss 31 für Hydraulikflüssigkeit sowie ein Füllstandsensor 30 vorgesehen.

Der Hydraulikblock 21 besitzt zwei Druckanschlüsse 32a, 32b, die mit den Anschlüssen 27a, 27b des Powerpacks 22 verbunden sind. Außerdem besitzt der Hydraulikblock 21 zwei Hydraulikanschlüsse 33a, 33b, die zu den Druckräumen 20a, 20b des Lenkzylinders 20 führen. Schließlich hat der Hydraulikblock 21 einen Anschluss 33 für die Rückleitung zum Tank 25 des Powerpacks 22. Zwischen den Anschlüssen 32a, 33a sowie 32b, 33b ist jeweils ein Rückschlagventil 34a, 34b angeordnet, über welches der betreffende Druckraum 20a, 20b des Lenkzylinders 20 mit Hydraulikdruck beaufschlagt werden kann. Ausgangsseitig ist hinter dem Rückschlagventil 34a, 34b jeweils über eine Zweigleitung ein elektrisch ansteuerbares, druckbegrenztes Ventil 35a, 35b angeschlossen, über das wiederum eine Leitung zu dem gemeinsamen Rücklaufanschluss 33 führt.

Um beispielsweise die Kolbenstange 20' auszufahren, wird der Motor 24 angesteuert, sodass die Pumpe 23 zu dem in Figur 4 linken Anschluss fördert. Über das Ventil 26b saugt die Pumpe Hydraulikflüssigkeit aus dem Tank 25 an und fördert diese zu dem Druckanschluss 27a und von dort über das Rückschlagventil 34a im Hydraulikblock 21 zu dessen Ausgang 33a und in den daran angeschlossenen Druckraum 20a. Gleichzeitig wird das Ventil 35b geöffnet, sodass Hydraulikflüssigkeit aus dem kolbenstangenseitigen Ringraum 20b über den Anschluss 33b und 33 mit einem leichten Überdruck zurück in den Tank 25 strömen kann. Das Ventil 35a ist dagegen geschlossen.

Die Ventile 35a, 35b sind als elektrisch verstellbare, druckbegrenzte Ventile ausgeführt, d.h. sie öffnen bei Überschreiten eines einstellbaren Schwellendrucks. Durch entsprechende Bestromung der Ventile 35a, 35b kann die Lenckraft geregelt werden. Außerdem sind die Ventile stromlos geöffnet, d.h. öffnen bereits bei einem Druck 0, wodurch im Falle eines Spannungsabfalls der Lenkzylinder 20 beiderseits drucklos und somit frei beweglich ist. In diesem Falle verhält sich die Hinterachse 4 wie eine herkömmliche selbstgelenkte Nachlaufachse.

Die Ansteuerung der Ventile 35a, 35b sowie des Motorsteuergeräts 24' erfolgt über ein elektronisches Steuergerät 37, ein sogenanntes ECU (Electronic Control Unit). Die Funktion des Motorsteuergeräts 24' kann hierbei auch in das elektronische Steuergerät 37 integriert sein. Über einen fahrzeuginternen Steuerbus 38 oder separate Steuerleitungen erhält das Steuergerät 37 Informationen über Fahrzeuggeschwindigkeit, Fahrtrichtung sowie Lenkeinschlag an der Vorderachse. Aus dem Lenkeinschlag an der Vorderachse ermittelt das Steuergerät 37 einen Lenkwinkel für die Hinterräder 8 entsprechend dem Lenkprinzip nach Ackermann und steuert die Pumpe entsprechend an, den ermittelten Lenkwinkel einzustellen. Zum Zwecke der Redundanz und Ausfallsicherheit kann das Steuergerät 37 mit zwei parallel arbeitenden Mikroprozessoren bestückt sein.

Das Steuergerät 37 ist so programmiert, dass es nur unterhalb einer Maximalgeschwindigkeit in Rückwärtsfahrtrichtung Lenkbewegungen der Hinterräder 8 ausführt. Bei höheren Fahrgeschwindigkeiten wird die Hinterachse 4 von der Hilfslenkung zentriert und mittels der Sperrvorrichtung 10' verriegelt. Zu diesem Zweck wird die Hilfslenkung so angesteuert, dass sie die Achse in Mittelstellung bringt, d.h. die Hinterräder 8 in Geradeausstellung bewegt. In dieser Stellung rastet die Sperrvorrichtung 10' ein und die Hilfslenkung wird anschließend durch Öffnen der Ventile 35a und 35b deaktiviert.

Bei einem LKW oder Bus ist es zusätzlich vorteilhaft, bei Stillstand des Fahrzeugs die Hilfslenkung der Hinterachse 4 zu deaktivieren. Bei einem Auflieger, bei dem das Lenksignal aus dem Winkel zwischen Zugmaschine und Auflieger ermittelt wird, wäre eine Deaktivierung bei Stillstand dagegen nicht notwendig, da im Stillstand der Zugmaschine an der Gelenkverbindung zwischen Zugmaschine und Auflieger, dem sogenannten Königszapfen, keine Bewegungen auftreten, so dass ein dort angebrachter Winkelsensor die Hilfslenkung ohnehin nicht ansteuern würde.

In Vorwärtsfahrtrichtung erfolgt eine Lenkunterstützung bei niedrigen Geschwindigkeiten bis etwa 15 km/h bis maximal 25 km/h. Bei höheren Fahrgeschwindigkeiten wird die Hilfslenkung wiederum deaktiviert, sodass die Hinterachse 4 sich wie eine normale selbstgelenkte Nachlaufachse verhält.

Um den korrekten Lenkwinkel an der Hinterachse 4 sicherzustellen, sind an den Achsschenkeln 6 Winkelsensoren 39 angebracht, mit denen der tatsächliche Lenkwinkel gemessen und an das Steuergerät 37 übertragen werden kann. Zusätzlich kann auch über die von der Pumpe 23 geförderte Flüssigkeitsmenge bei bekannter hydraulisch wirksamer Fläche des Lenkzylinders 20 der Hub der Kolbenstange 20' und damit der Lenkwinkel ermittelt werden. Hierzu wird am Motorsteuergerät 24' die Anzahl der Pumpenumdrehungen gezählt.

Das Steuergerät 37 steuert bei aktivierter Hilfslenkung den Lenkeinschlag an den Hinterrädern 8. Außerdem ist es für verschiedene Sicherheitsmaßnahmen verantwortlich. Im Fehlerfalle deaktiviert es über die Ventile 35a, 35b die Hilfslenkung, sodass sich die Hinterachse 4 wie eine normale Selbstlenker-Nachlaufachse verhält. Zu diesem Zweck ist im Fehlerfalle bzw. bei deaktivierter Hilfslenkung die Verriegelungsvorrichtung an der Hinterachse 4 aktiv und verriegelt die Hinterachse bei Rückwärtsfahrt und - soweit für die jeweilige Achse vorgesehen - auch bei schneller Fahrt des Fahrzeugs (> 50 km/h) in ihrer neutralen Mittelstellung. Bei aktiver Hilfslenkung deaktiviert das Steuergerät 37 die Verriegelungsvorrichtung hingegen und verhindert so ein Arretieren der Hinterachse in Neutralstellung.

Das Steuersignal, auf Grund dessen der Lenkeinschlag an der Hinterachse 4 ermittelt wird, kommt, wie bereits erläutert, von der Vorderachslenkung des Fahrzeugs 1. Bei einer alternativen Ausführungsform im Falle eines Aufliegers wird das Steuersignal vorzugsweise von einem an der Gelenkverbindung zwischen Zugmaschine und Auflieger, dem sogenannten Königszapfen, angeordneten Winkelsensor, der den Winkel zwischen Zugmaschine und Auflieger misst, erzeugt. Aus Sicherheitsgründen sind hier vorzugsweise redundante Sensoren am Königszapfen vorgesehen.

Das Steuergerät 37 ermittelt auf Grund des von der Vorderachslenkung bzw. am Königszapfen gemessenen Steuersignals einen Lenkwinkel für die Hinterachse 4. Dieser wird als Sollwert zur Ansteuerung der Hilfslenkung der Hinterachse 4 verwendet. Zuvor erfolgt jedoch eine Überprüfung der Fahrtgeschwindigkeit und Fahrtrichtung, ob diese innerhalb des für den Betrieb der Hilfslenkung vorgesehenen Bereichs liegen. Ist dies der Fall, so wird der Sollwert für den Lenkwinkel in eine erforderliche Anzahl von Pumpenumdrehungen umgerechnet und der Motor 24 entsprechend angesteuert. Die Lenkgenauigkeit ergibt sich somit aus der Geometrie der Steuerung, also der Länge der Steuerarme 9, Abmessungen des Lenkzylinders 20 sowie der Genauigkeit der Motorsteuerung 24'. Um eine Aufaddierung von Fehlern bei der Ansteuerung der Hilfslenkung bzw. hinsichtlich der Lenkwinkelposition zu vermeiden, wird der von der Steuerung auf Grund der Pumpenumdrehungen ermittelte Ist-Lenkwinkel zurückgesetzt, wenn die Hinterachse in Mittelposition arretiert. Zusätzlich oder alternativ kann der tatsächliche Lenkwinkel auch mittels entsprechender Sensoren 39 an den Achsschenkeln 6 gemessen werden, sodass die Einstellung des Lenkwinkels mit geschlossener Regelschleife arbeitet.

Die Funktion der Verriegelung der Hinterachse 4 kann wie bei herkömmlichen selbstlenkenden Nachlaufachsen eine separate Sperrvorrichtung 10' ausüben. Ebenso ist es möglich, eine entsprechende Verriegelungsfunktion im Lenkzylinder 20 selbst vorzusehen. Dieser muss somit mit einer passiven Zentrier- und Haltefunktion ausgestattet sein. Die Montage des Lenkzylinders muss in diesem Falle so erfolgen, dass seine gesperrte Position der Geradeausstellung der Hinterräder entspricht.

Um ein überempfindliches bzw. nervöses Verhalten der Hilfslenkung an der Hinterachse 4 zu vermeiden, wird in einem Bereich kleiner Lenkeinschläge an der Vorderachse bzw. kleiner Winkel am Königszapfen zwischen Zugmaschine und Auflieger in einem Bereich von ± 2° eine Lenkbewegung an der Hinterachse 4 verhindert. Innerhalb dieses Totbereichs bleibt somit die Hinterachse 4 in Mittelstellung und es erfolgt keine Lenkbewegung.

Bei Vorwärtsfahrt mit Geschwindigkeiten von über 15 km/h bzw. 20 km/h werden die Ventile 35a, 35b geöffnet und die Hilfslenkung somit deaktiviert. Der Lenkausschlag der Hinterachse erfolgt daher, wie bei einer selbstgelenkten Nachlaufachse üblich, auf Grund der Reibungskräfte zwischen Straße und Hinterrädern 8. Falls der Fahrzeughersteller dies vorsieht, kann die Hinterachse 4 bei noch höherer Geschwindigkeit, z.B. über 50 km/h, mit Hilfe der Sperrvorrichtung in ihrer Mittelstellung arretiert werden, um ein unruhiges Fahrverhalten zu vermeiden.

Bei dem in Figur 4 gezeigten Ausführungsbeispiel mit nur einem als Differentialzylinder ausgeführten Lenkzylinder 20 unterscheiden sich auf Grund der unterschiedlichen hydraulisch wirksamen Flächen die Lenkkräfte in die beiden Lenkrichtungen. Der Lenkzylinder muss somit so ausgelegt werden, dass er auf der Kolbenstangenseite mit geringerer hydraulisch wirksamer Fläche die erforderlichen Lenkkräfte aufbringen kann.

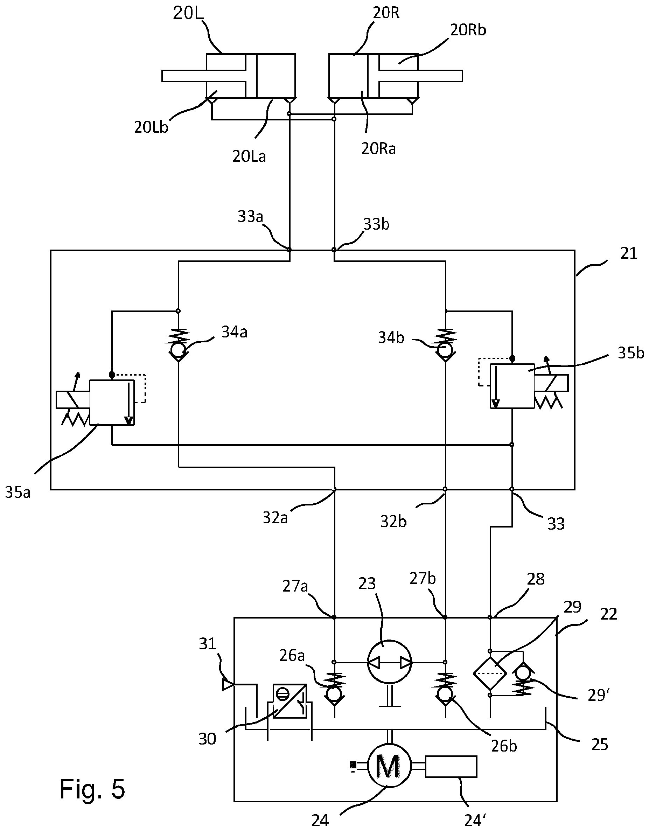

Bei einem zweiten in Figur 5 gezeigten Ausführungsbeispiel werden daher stattdessen zwei separate Lenkzylinder, nämlich ein linker Lenkzylinder 20L und ein rechter Lenkzylinder 20R verwendet. Diese sind in der in Figur 5 gezeigten Weise hydraulisch zusammengeschlossen, indem der kolbenstangenseitige Druckraum 20Lb des linken Lenkzylinders 20L mit dem kolbenseitigen Druckraum 20Ra des rechten Lenkzylinders 20R und der kolbenstangenseitige Druckraum 20Rb des rechten Lenkzylinders 20R mit dem kolbenseitigen Druckraum 20La des linken Lenkzylinders 20L verbunden wird. Ein Gleichlauf der beiden Lenkzylinder 20L und 20R wird über die mechanische Kopplung der Spurhebel 9 über die Spurstange 10 sichergestellt. Die übrigen Bauteile entsprechen denen des in Figur 4 gezeigten ersten Ausführungsbeispiels. Auf diese Weise wird erreicht, dass die Lenkkräfte in beide Lenkrichtungen gleich groß sind.

## Patentansprüche

1. Selbstlenkende Hinterachse (4) für ein Fahrzeug (1), insbesondere Nachlaufachse, mit einem Achskörper (5) und zwei beiderseits des Achskörpers (5) schwenkbar um jeweils eine Schwenkachse (7) angelenkte Achsschenkel (6), die je eine Radnabe (11) zur Befestigung eines Hinterrades (8) tragen und die über eine Spurstange (10) miteinander in Verbindung stehen, wobei sich die Schwenkachse (7) in Vorwärtsfahrtrichtung in einem Abstand (X), vorzugsweise mindestens 100 mm, vor der Mittelachse der zugehörigen Radnabe (11) befindet, wodurch bei einer Kurvenfahrt in Vorwärtsfahrtrichtung durch Reibungskräfte der Hinterräder (8) auf der Straße ein selbsttätiger Lenkeinschlag der Achsschenkel (6) erfolgt, und mit einer Hilfslenkung mit,
- mindestens einem auf die Achsschenkel (6) wirkenden hydraulischen Lenkzylinder (20), mit
- einer elektrischen Hydraulikpumpe (23), die mit dem Lenkzylinder (20) hydraulisch verbunden ist, und mit
- einem Steuergerät (37), welches ausgebildet ist, die Hydraulikpumpe (23) bei einer Rückwärtsfahrt anzusteuern, um in Abhängigkeit eines Lenksignals über den Lenkzylinder (20) einen Lenkeinschlag der Achsschenkel (6) einzustellen,
**dadurch gekennzeichnet, dass**
das Steuergerät (37) ausgebildet ist, bei einer langsamen Vorwärtsfahrt des Fahrzeugs (1) bis zu einer für Vorwärtsfahrt vorgegebenen ersten Höchstgeschwindigkeit, insbesondere von nicht mehr als 25 km/h, eine Lenkbewegung der Hinterräder (8) in Abhängigkeit des Lenksignals mittels der Hilfslenkung zu unterstützen und diese bei einer Vorwärtsfahrt des Fahrzeugs ab einer Geschwindigkeit über der ersten Höchstgeschwindigkeit zu deaktivieren, wodurch sich die Hinterachse nachlaufgelenkt verhält.

2. Hinterachse nach Anspruch 1, mit einer Sperrvorrichtung (10') zur Verriegelung einer Lenkbewegung der Hinterräder (8) in einer Geradeausstellung im Falle einer Rückwärtsfahrt, wobei das Steuergerät (37) ausgebildet ist, die Sperrvorrichtung (10') bei aktivierter Hilfslenkung zu deaktivieren und bei deaktivierter Hilfslenkung eine Verriegelung durch die Sperrvorrichtung (10') zuzulassen.

3. Hinterachse nach Anspruch 2, bei der das Steuergerät (37) ausgebildet ist, bei Rückwärtsfahrt des Fahrzeugs (1) mit einer Geschwindigkeit über einer für Rückwärtsfahrt vorgegebenen zweiten Höchstgeschwindigkeit, vorzugsweise von nicht mehr als 20 km/h und weiter vorzuzugsweise von nicht mehr als 15 km/h, die Hinterräder (8) mittels der Hilfslenkung in Geradeausstellung zu bringen, eine Verriegelung der Hinterachse durch die Sperrvorrichtung (10') zuzulassen und anschließend die Hilfslenkung zu deaktivieren.

4. Hinterachse nach einem der vorangehenden Ansprüche, bei der das Steuergerät (37) ausgebildet ist, die Hilfslenkung bei Stillstand des Fahrzeugs (1) zu deaktivieren.

5. Hinterachse nach einem der vorangehenden Ansprüche, bei der die Hydraulikpumpe (23) als reversierende Pumpe ausgebildet ist, deren Pumprichtung durch Wechsel der Drehrichtung umkehrbar ist, um wahlweise Hydraulikflüssigkeit zu einem von zwei Anschlüssen (27a, 27b) zu fördern, und bei dem der Lenkzylinder (20) zwei Zylinderräume (20a, 20b) hat, die jeweils mit einem der beiden Anschlüsse (27a, 27b) der Hydraulikpumpe verbunden sind.

6. Hinterachse nach einem der vorangehenden Ansprüche, bei der der Lenkzylinder (20) zwei Druckräume (20a, 20b) aufweist, die wechselseitig von der Hydraulikpumpe (23 druckbeaufschlagt werden können und die über je eine von einer Zuleitung abzweigenden und mit einem elektrisch oder hydraulisch steuerbaren Ventil (35a, 35b) versehenden Rückflussleitung zu einem Tank (25) hin druckentlastet werden können.

7. Hinterachse nach Anspruch 6, bei der die Ventile (35a, 35b) als elektrisch steuerbare, stromlos geöffnete Ventile ausgebildet sind.

8. Hinterachse nach Anspruch 6 oder 7, bei der das Steuergerät (37) ausgebildet ist, die Ventile (35a, 35b) zur Deaktivierung der Hilfslenkung zu öffnen.

9. Hinterachse nach einem der Ansprüche 6 bis 8, bei der die Ventile (35a, 35b) in einem hydraulischen Steuerblock (21) integriert sind.

10. Hinterachse nach einem der vorangehenden Ansprüche mit mindestens einem mit dem Steuergerät (37) verbundenen Sensor (39) zur Bestimmung eines Einschlagwinkels der Achsschenkel (6).

11. Hinterachse nach einem der vorangehenden Ansprüche, welche für einen Auflieger ausgebildet ist und bei der das Steuergerät (37) mit einem am Königszapfen des Aufliegers angeordneten Sensor zur Bestimmung eines Relativwinkels zwischen Zugfahrzeug und Auflieger verbunden ist, um das Lenksignal zu erzeugen.

12. Hinterachse nach einem der vorangehenden Ansprüche, bei der das Steuergerät (37) mit einer Schnittstelle für einen fahrzeuginternen Kommunikationsbus (38) versehen ist, um das Lenksignal und/oder ein fahrgeschwindigkeitsabhängiges Signal und/oder ein Signal, welches eine Rückwärtsfahrt anzeigt, zu erhalten.

13. Hinterachse nach einem der vorangehenden Ansprüche, bei der das Steuergerät (37) ausgebildet ist, eine Lenkbewegung der Achsschenkel innerhalb eines Winkelbereichs um die Mittellage, im Fall eines Aufliegers vorzugsweise innerhalb eines Winkelbereichs von ± 2° zwischen Zugfahrzeug und Auflieger, zu unterbinden.

14. Hinterachse nach Anspruch 2, bei der die Sperrvorrichtung (10') in den Lenkzylinder (20) integriert ist.

## Claims

1. Self-steering rear axle (4) for a vehicle (1), especially a trailing axle, having an axle beam (5) and two stub axles (6) which are each pivotally articulated about a pivot axis (7) at either end of the axle beam (5), which stub axles each carry a wheel hub (11) for attachment of a rear wheel (8) and which are connected to one another via a track rod (10), wherein the pivot axis (7) is located in front of the centre axis of the associated wheel hub (11) at a distance (X), preferably of at least 100 mm, therefrom in the forward travel direction, so that during cornering in the forward travel direction the stub axles (6) are steered automatically by frictional forces of the rear wheels (8) on the road, and having a power-assisted steering system with
- at least one hydraulic steering cylinder (20) acting on the stub axles (6), with
- an electric hydraulic pump (23) which is hydraulically connected to the steering cylinder (20), and with
- a control unit (37) which is designed to actuate the hydraulic pump (23) during reverse travel in order to adjust a turning angle of the stub axles (6) by means of the steering cylinder (20) in dependence upon a steering signal,
**characterised in that**
the control unit (37) is designed, during slow forward travel of the vehicle (1) up to a first maximum speed specified for forward travel, especially a speed of not more than 25 km/h, to assist a steering movement of the rear wheels (8) by means of the power-assisted steering system in dependence upon the steering signal and, during forward travel of the vehicle at a speed above the first maximum speed, to deactivate the power-assisted steering system, with the result that the rear axle acts as a trailing axle.

2. Rear axle according to claim 1, having a disabling device (10') for locking a steering movement of the rear wheels (8) in a straight-ahead position in the case of reverse travel, the control unit (37) being designed to deactivate the disabling device (10') when the power-steering system is activated and to permit locking by the disabling device (10') when the power-assisted steering system is deactivated.

3. Rear axle according to claim 2, wherein the control unit (37) is designed to move the rear wheels (8) into the straight-ahead position by means of the power-assisted steering system during reverse travel of the vehicle (1) at a speed above a second maximum speed specified for reverse travel, preferably a speed of not more than 20 km/h and more preferably a speed of not more than 15 km/h, to permit locking of the rear axle by the disabling device (10') and then to deactivate the power-assisted steering system.

4. Rear axle according to any one of the preceding claims, wherein the control unit (37) is designed to deactivate the power-assisted steering system when the vehicle (1) is stationary.

5. Rear axle according to any one of the preceding claims, wherein the hydraulic pump (23) is designed as a reversing pump, the pump direction of which is reversible by changing the rotational direction in order selectively to feed hydraulic fluid to one of two ports (27a, 27b), and wherein the steering cylinder (20) has two cylinder chambers (20a, 20b) each of which is connected to one of the two ports (27a, 27b) of the hydraulic pump.

6. Rear axle according to any one of the preceding claims, wherein the steering cylinder (20) has two pressure chambers (20a, 20b) which can be pressurised alternately by the hydraulic pump (23) and each of which can be depressurised via a return flow line leading to a tank (25), which return flow line branches off from a supply line and is provided with an electrically or hydraulically controllable valve (35a, 35b).

7. Rear axle according to claim 6, wherein the valves (35a, 35b) are designed as electrically controllable, normal-open valves.

8. Rear axle according to claim 6 or 7, wherein the control unit (37) is designed to open the valves (35a, 35b) for deactivation of the power-assisted steering system.

9. Rear axle according to any one of claims 6 to 8, wherein the valves (35a, 35b) are integrated in a hydraulic control block (21).

10. Rear axle according to any one of the preceding claims having at least one sensor (39) connected to the control unit (37) for determination of a turning angle of the stub axles (6).

11. Rear axle according to any one of the preceding claims, which is designed for a semi-trailer and wherein the control unit (37) is connected to a sensor arranged on the king pin of the semi-trailer for determination of a relative angle between the tractor vehicle and the semi-trailer in order to generate the steering signal.

12. Rear axle according to any one of the preceding claims, wherein the control unit (37) is provided with an interface for an in-vehicle communication bus (38) in order to receive the steering signal and/or a driving-speed-dependent signal and/or a signal which indicates reverse travel.

13. Rear axle according to any one of the preceding claims, wherein the control unit (37) is designed to prevent a steering movement of the stub axles within an angular range around the central position, in the case of a semi-trailer preferably within an angular range of ± 2° between the tractor vehicle and the semi-trailer.

14. Rear axle according to claim 2, wherein the disabling device (10') is integrated into the steering cylinder (20).

## Revendications

1. Essieu arrière autoguidé (4) pour un véhicule (1), en particulier essieu traîné, comportant un corps d'essieu (5) et deux fusées d'essieu (6) articulées de part et d'autre du corps d'essieu (5) de manière pivotante autour d'un axe de pivotement (7) respectivement, lesquelles supportent respectivement un moyeu de roue (11) pour la fixation d'une roue arrière (8) et lesquelles sont en liaison l'une avec l'autre par le biais d'une barre d'accouplement (10), dans lequel l'axe de pivotement (7) se trouve à une distance (X), de préférence d'au moins 100 mm, devant l'axe médian du moyeu de roue associé (11) dans le sens de marche avant, de sorte qu'en cas de conduite en virage dans le sens de marche avant, un braquage automatique des fusées d'essieu (6) ait lieu sous l'effet de forces de friction des roues arrière (8) sur la route, et comportant une direction auxiliaire comportant
- au moins un cylindre de direction hydraulique (20) agissant sur les fusées d'essieu (6), comportant
- une pompe hydraulique électrique (23) qui est reliée hydrauliquement au cylindre de direction (20), et comportant
- un appareil de commande (37), lequel est conçu pour commander la pompe hydraulique (23) en cas de marche arrière, afin de régler un braquage des fusées d'essieu (6) par le biais du cylindre de direction (20) en fonction d'un signal de direction,
**caractérisé en ce que**
l'appareil de commande (37) est conçu, en cas de marche avant lente du véhicule (1) jusqu'à une première vitesse maximale prédéfinie pour la marche avant, en particulier n'excédant pas 25 km/h, pour assister un mouvement de direction des roues arrière (8) en fonction du signal de direction au moyen de la direction auxiliaire et pour désactiver celle-ci en cas de marche avant du véhicule à partir d'une vitesse au-delà de la première vitesse maximale, de sorte que l'essieu arrière se comporte de manière traînée.

2. Essieu arrière selon la revendication 1, comportant un dispositif de blocage (10') pour le verrouillage d'un mouvement de direction des roues arrière (8) dans une position en ligne droite en cas de marche arrière, dans lequel l'appareil de commande (37) est conçu pour désactiver le dispositif de blocage (10') en cas de direction auxiliaire activée et pour autoriser un verrouillage au moyen du dispositif de blocage (10') en cas de direction auxiliaire désactivée.

3. Essieu arrière selon la revendication 2, dans lequel l'appareil de commande (37) est conçu, en cas de marche arrière du véhicule (1) à une vitesse au-delà d'une deuxième vitesse maximale prédéfinie pour la marche arrière, de préférence n'excédant pas 20 km/h et de manière particulièrement préférée n'excédant pas 15 km/h, pour amener les roues arrière (8) en position en ligne droite au moyen de la direction auxiliaire, pour autoriser un verrouillage de l'essieu arrière au moyen du dispositif de blocage (10') et pour ensuite désactiver la direction auxiliaire.

4. Essieu arrière selon l'une des revendications précédentes, dans lequel l'appareil de commande (37) est conçu pour désactiver la direction auxiliaire en cas d'arrêt du véhicule (1).

5. Essieu arrière selon l'une des revendications précédentes, dans lequel la pompe hydraulique (23) est conçue en tant que pompe réversible dont le sens de pompe peut être inversé par changement du sens de rotation, afin de refouler sélectivement du liquide hydraulique jusqu'à l'un parmi deux raccords (27a, 27b), et dans lequel le cylindre de direction (20) présente deux chambres de cylindre (20a, 20b) qui sont reliées respectivement à l'un des deux raccords (27a, 27b) de la pompe hydraulique.

6. Essieu arrière selon l'une des revendications précédentes, dans lequel le cylindre de direction (20) comprend deux chambres de pression (20a, 20b) qui peuvent être sollicitées en pression alternativement par la pompe hydraulique (23) et qui peuvent être soumises à une réduction de pression par le biais d'une conduite de reflux respective vers un réservoir (25), laquelle conduite bifurque à partir d'une conduite d'amenée et est dotée d'une soupape (35a, 35b) pouvant être commandée électriquement ou hydrauliquement.

7. Essieu arrière selon la revendication 6, dans lequel les soupapes (35a, 35b) sont conçues en tant que soupapes pouvant être commandées électriquement et ouvertes sans courant.

8. Essieu arrière selon la revendication 6 ou 7, dans lequel l'appareil de commande (37) est conçu pour ouvrir les soupapes (35a, 35b) pour la désactivation de la direction auxiliaire.

9. Essieu arrière selon l'une des revendications 6 à 8, dans lequel les soupapes (35a, 35b) sont intégrées dans un bloc de commande hydraulique (21).

10. Essieu arrière selon l'une des revendications précédentes, comportant au moins un capteur (39) relié à l'appareil de commande (37) pour la détermination d'un angle de braquage des fusées d'essieu (6).

11. Essieu arrière selon l'une des revendications précédentes, lequel est conçu pour une semi-remorque et dans lequel l'appareil de commande (37) est relié à un capteur, disposé au niveau du pivot d'attelage de la semi-remorque, pour la détermination d'un angle relatif entre le véhicule tracteur et la semi-remorque, afin de produire le signal de direction.

12. Essieu arrière selon l'une des revendications précédentes, dans lequel l'appareil de commande (37) est doté d'une interface pour un bus de communication (38) interne au véhicule, afin d'obtenir le signal de direction et/ou un signal dépendant de la vitesse de conduite et/ou un signal qui indique une marche arrière.

13. Essieu arrière selon l'une des revendications précédentes, dans lequel l'appareil de commande (37) est conçu pour empêcher un mouvement de direction des fusées d'essieu dans une plage angulaire autour de la position médiane, dans le cas d'une semi-remorque de préférence dans une plage angulaire de ± 2° entre le véhicule tracteur et la semi-remorque.

14. Essieu arrière selon la revendication 2, dans lequel le dispositif de blocage (10') est intégré dans le cylindre de direction (20).
